**Europäisches Patentamt**

**European Patent Office**

**Office européen des brevets**

(19)

(11) **EP 1 359 519 A2**

(12) **EUROPEAN PATENT APPLICATION**

(43) Date of publication:
**05.11.2003 Bulletin 2003/45**

(51) Int Cl.⁷: **G06F 17/30**

(21) Application number: **03008843.9**

(22) Date of filing: **25.04.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(30) Priority: **30.04.2002 JP 2002128015**<br><br>(71) Applicant: **Pioneer Corporation**<br>**Meguro-ku, Tokyo (JP)**<br><br>(72) Inventors:<br>• **Nakamura, Takeshi, Pioneer Cor.,**<br>**Cor.Re.Dev.Lap.**<br>**Saitama 350-2288 (JP)** | • **Ohta, Yoshiki, Pioneer Cor., Cor.Re.Dev.Lap.**<br>**Saitama 350-2288 (JP)**<br>• **Hata, Takuya Pioneer Cor., Cor.Re.Dev.Lap.**<br>**Saitama 350-2288 (JP)**<br><br>(74) Representative:<br>**Klingseisen, Franz, Dipl.-Ing. et al**<br>**Patentanwälte,**<br>**Dr. F. Zumstein,**<br>**Dipl.-Ing. F. Klingseisen,**<br>**Postfach 10 15 61**<br>**80089 München (DE)** |

(54) **Information providing apparatus and method**

(57)    An information providing machine provides a network user with information that helps the network user in determining a place to go. The user designates an area and makes a map request. The information providing machine sends map data to the user in response to the request from the user. Every time the user makes a map request, popularity point is given to locations existing in the designated area. The popularity point is accumulated and used by the network user.

FIG.1

EP 1 359 519 A2

**Description**

BACKGROUND OF THE INVENTION

1. Field of the Invention

The present invention relates to an apparatus and a method for providing network users with various information via a communication network.

2. Description of the Related Art

Many information sites exist on networks, such as the Internet, to provide network users with information about particular facilities and areas (e.g., restaurants, shops, hotels, amusement places, city halls, parks and sightseeing spots). A network user can select one restaurant from a plurality of restaurant information pieces provided via the network, for example. In order to decide the restaurant, the network user often relies upon recommendation information and articles in magazines.

SUMMARY OF THE INVENTION

An object of the present invention is to provide an apparatus and a method for providing a user with supplemental and/or helpful information when the user select one of a plurality of information pieces.

According to one aspect of the present invention, there is provided an information providing apparatus for providing a terminal device with map data via a network, comprising: a first memory for storing coordinate information of a plurality of locations; a second memory for storing popularity points of the locations; a map transmitter for transmitting map data of an area, which is designated by the terminal device, to the terminal device via the network; a detector for detecting a location in the designated area based on the coordinate information stored in the first memory; and a point calculator for incrementing the popularity point of the detected location stored in the second memory upon detection of the location.

A network user (or the terminal device) designates the area and makes a map request. The information providing apparatus sends the map data to the user in response to the request from the user. Every time the user makes a map request, the popularity point is given to locations existing in the designated area. The popularity points are accumulated. If the information providing apparatus provides the user with a popularity ranking list, which indicates location names arranged in an order based on the popularity points, the user can consider the ranking list in deciding a place to go.

According to another aspect of the present invention, there is provided a method of providing a terminal device with map data via a network, comprising: transmitting map data of an area, which is designated by the terminal device, to the terminal device via the network; detecting a location in the designated area; and incrementing a popularity point of the detected location upon detection of the location.

BRIEF DESCRIPTION OF THE DRAWINGS

Figure 1 schematically illustrates a network system including an information providing apparatus according to one embodiment of the present invention;
Figure 2 illustrates information stored in a popular location (trendy spot) database of the information providing apparatus shown in Figure 1;
Figure 3 illustrates communication procedures between a user terminal device and a map information server shown in Figure 1;
Figure 4 illustrates a map search image;
Figure 5 illustrates a map image window;
Figure 5A is similar to Figure 5 and illustrates the map image window when an enlarged map is displayed;
Figure 6 illustrates a flowchart of a popularity point calculation process performed by a popularity point calculator shown in Figure 1;
Figure 7 illustrates information stored in a popularity point memory;
Figure 8 illustrates an example of a popular location ranking list;
Figure 9 illustrates a network system including an information providing apparatus according to another embodiment of the present invention;
Figure 10 shows data stored in an access history database of the apparatus shown in Figure 9;
Figure 11 illustrates communication procedures between a user terminal device and a map information server shown in Figure 9; and
Figure 12 illustrates contents stored in the popularity point memory when the popularity points are calculated in accordance with street names.

DETAILED DESCRIPTION OF THE INVENTION

Embodiments of the present invention will be described with reference to the accompanying drawings.

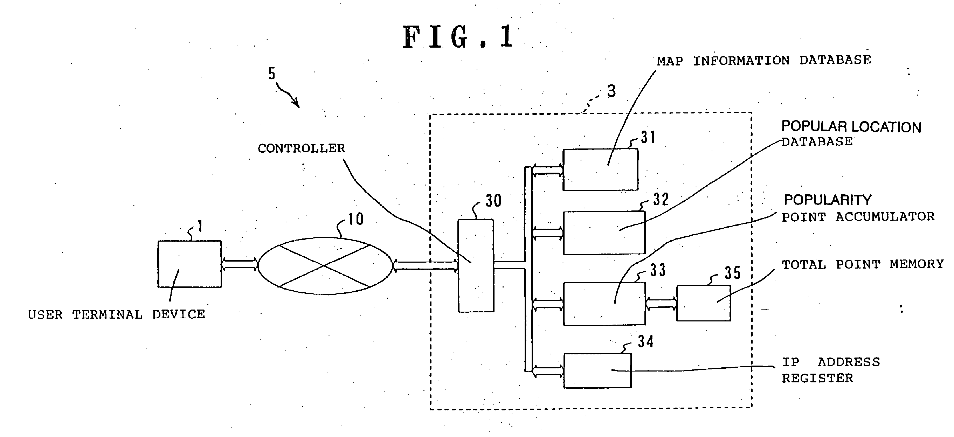

Referring to Figure 1, an information providing system 5 according to one embodiment of the present invention is schematically illustrated. The information providing system 5 includes the Internet 10, a plurality of user terminal devices 1 and a map information server 3. It should be noted that only one of the terminal devices 1 is illustrated in the drawing for the sake of simplicity. The Internet 10 is one example of wide area networks. The terminal devices 1 are connected to the Internet 10, and the map information server 3 is also connected to the Internet 10.

The user terminal device 1 is a data device such as a personal computer, and receives various information via the Internet 10. To see the information, the user terminal device 1 has browser software installed beforehand.

The map information server 3 provides the user terminal device 1 with map data of a particular area in response to a map request from the user terminal device 1. The map information server 3 includes a controller circuit 30, a map information database 31, a popular location (trendy spot) database 32, a popular location information gathering and processing unit 33, an IP address register 34 and a point accumulation memory 35.

The map information database 31 stores map data of every region in Japan. The map data is road map data in this embodiment, and is stored in various magnification scales. The map data includes information of many locations such as restaurants, shops, hotels, amusement places, public facilities, data communication buildings, parks and sightseeing places.

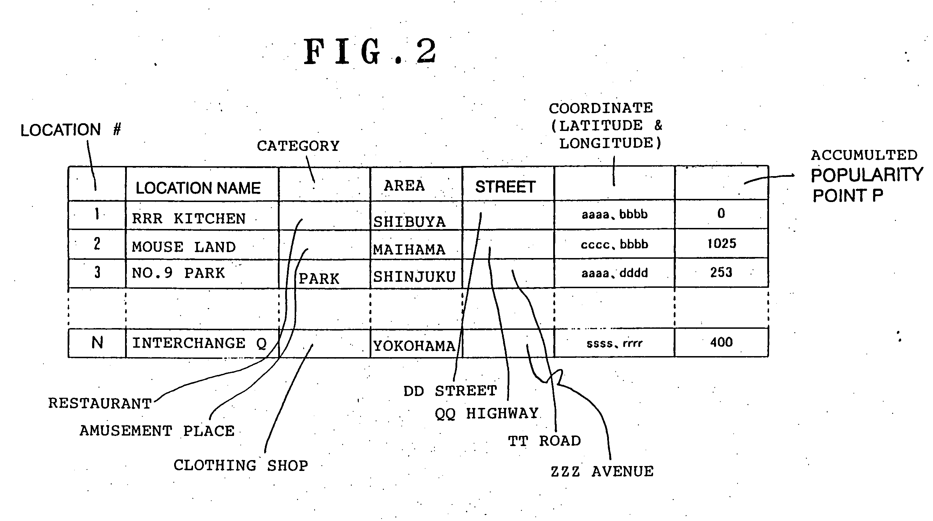

The popular location database 32 stores names, categories, areas, roads (streets or highways), and coordinates (e.g., latitudes and longitudes) of popular locations existing on the road map, in the form of the chart or table shown in Figure 2, for example. The popular location database 32 also has a memory area to store "point" of the locations, which indicate popularity of the locations. In this embodiment, the initial value of the popularity point is zero, and the popularity point is accumulated. The "category" of the location is, for instance, a restaurant, supermarket, drug store, electronics shop, clothing store, department store, convenient store, amusement facility, park, or sightseeing place. The "area" is a name of a region, area, town, or city, which the location (or spot) in question belongs to. The "road" is a name of the street, road or highway, which the location in question is located on.

The control circuit 30 establishes the communication between the user terminal device 1 and the map information server 3 via the Internet 10. Every time there is an access from the user terminal device 1, the control circuit 30 attaches the current time to the IP address of the user terminal device 1, and stores the IP address in the register 34. The control circuit 30 prepares a map image of a certain area in response to a request from the user terminal device 1, by using the map data stored in the map information database 31. The control circuit 30 then sends back the map image to the user terminal device 1. The request from the user terminal designates the area.

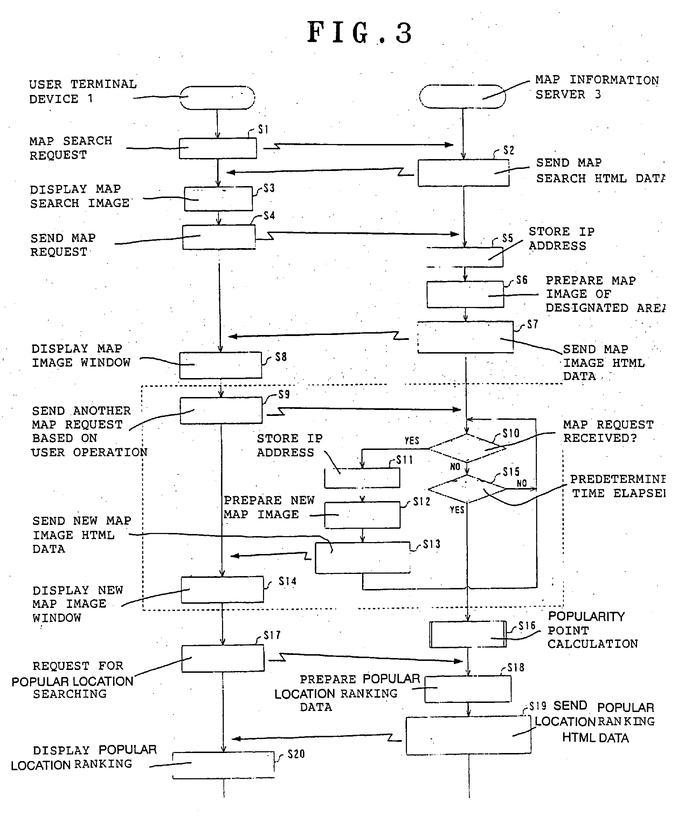

Referring to Figure 3, communication procedures between the user terminal device 1 and the map information server 3 are illustrated.

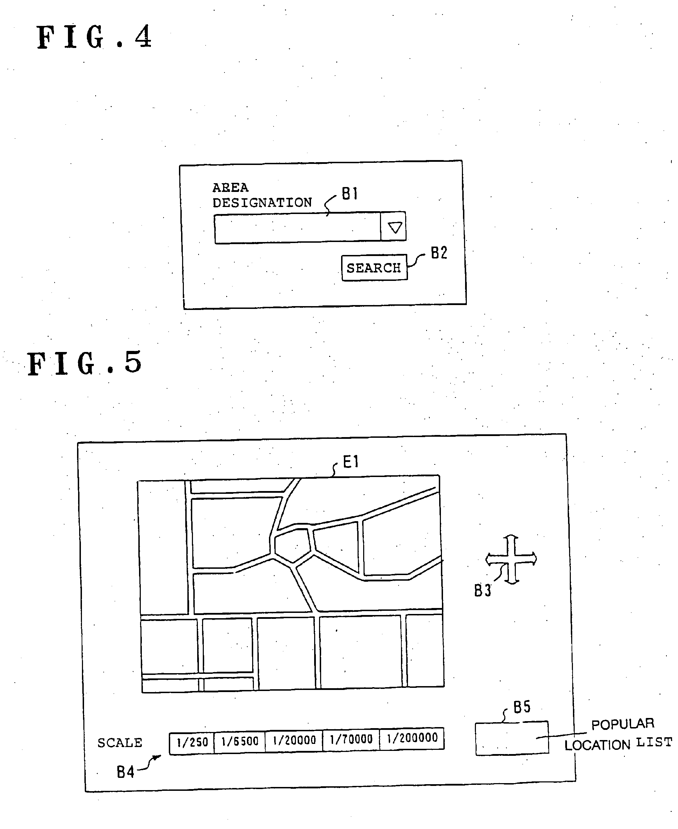

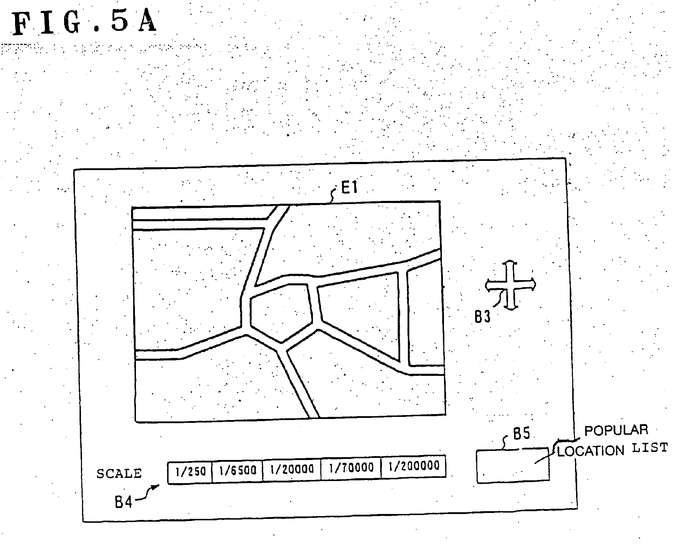

First, the user operates the data terminal device 1 to send a map search request to the map information server 3 (Step S1). Upon receiving the map search request, the map information server 3 sends map searching HTML (hyper text markup language) data to the data terminal device 1 (Step S2). The map searching HTML data includes an image for map searching. Based on the map searching HTML data, the data terminal device 1 displays a map searching image, as shown in Figure 4, on a display unit (not shown) (Step S3). Subsequently, the user operates the data terminal device 1 to enter the name of a desired area into an "area designation" portion B1 of the map searching image, and clicks a "search" button B2. The data terminal device 1 then outputs a map request to the map information server 3 so that the map of the area specified by the area designation portion B1 will be prepared (Step S4). The map information server 3 attaches the time of when the map information server 3 receives the map request, to the IP address of the data terminal device 1 and stores the IP address in the register 34 (Step S5). Thus, the current time and the IP address of the data terminal device 1 that makes the map request are related to each other in the register 34. The map information server 3 retrieves map data of the particular area, which is specified by the map request, from the map information database 31, and prepares a map image based on the map data (Step S6). The map information server 3 then sends map image HTML data to the user terminal device 1 (Step S7). The map image HTML data includes the image data of the map image just prepared. When the user terminal device 1 receives the map image HTML data, the user terminal device 1 prepares and displays a map image window, as shown in Figure 5, on the display based on the map image HTML data (Step S8). The map image window includes a map display section E1 to show the map of the area designated by the area designation section B1 (Figure 4). When the user wants to shift the map displayed in the map section E1, the user clicks a shift button B3. The displayed map can therefore move up and down as well as right and left. By clicking a reduction scale button B4, the user is also able to change a magnification of the map displayed in the map section E1. In order to display a new map of a different scale at a shifted position, the user terminal device 1 sends a new map request to the map information server 3 to have map data for the new map (Step S9).

The map information server 3 determines whether the map request has reached (Step S10). If the map information server 3 detects the arrival of the map request, the map information server 3 appends the current time to the IP address of the user terminal device 1, and stores the IP address in the register 34 (Step S11). The current time is, for example, the time of receiving the map request from the user terminal device 1. The map information server 3 then reads the map data from the map information database 31 in accordance with the information (the designated area and scale) included in the received map request, and prepares a map image from the map data (Step S12). The map information server 3 transmits map image HTML data including the map image to the user terminal device 1 (Step S13).

Upon receiving the map image HTML data, the user terminal device 1 displays the new map on the display unit based on the map image HTML data, as shown in Figure 5A (Step S14). In this embodiment, the new map is the enlarged map.

If Step S10 determines that the map request is not received, the map information server 3 determines whether a predetermined time (e.g., 30 seconds) has elapsed since the time stored in the IP address register 34 (Step S15). When it is determined at Step S15 that the predetermined time has not elapsed, the map information server 3 returns to Step S10 and waits for the map request from the user terminal device 1. Steps S9 to S14 are iterated as long as the user repeatedly operates the buttons B3 and/or B4 (Figure 5) to enter different scale commands and/or map position shift commands in 30 seconds. In other words, when the user does clicks neither button B3 nor the button B4 during the 30-second period, then the operation program proceeds to Step S16. Counting of the time at Step S15 is reset (restarted from zero second) every time the map information server 3 receives a map request of Step S9. The broken line square in Figure 3 indicates the repeated operations.

When it is determined at Step S15 that the magnification change and the map position shift are not requested in the predetermined period, the map information server 3 executes a popularity point calculation process (Step S16). It is considered that the user has obtained a map having a desired reduction scale at a desired position if the magnification change and the map position adjustment are not requested in 30 seconds.

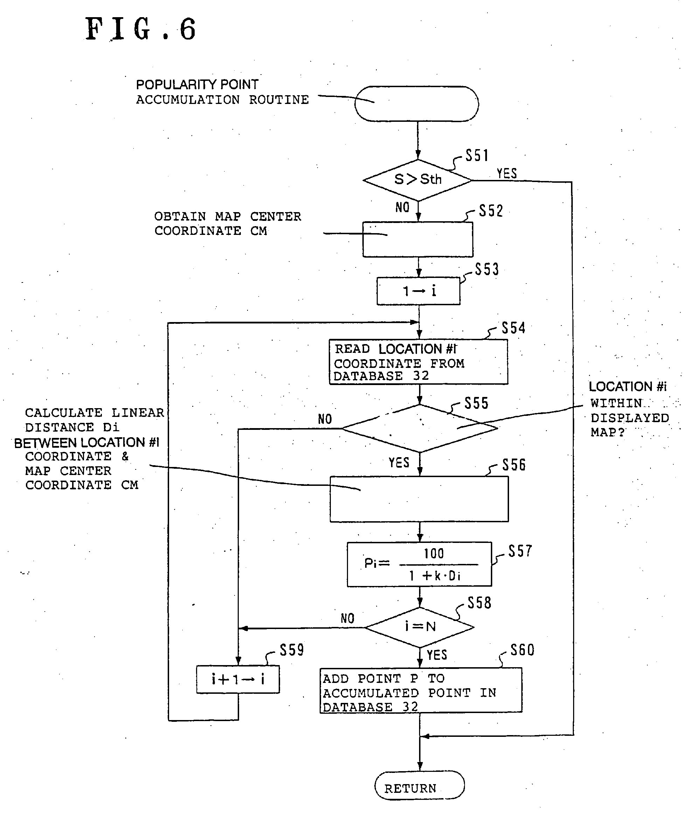

Referring to Figure 6, a subroutine for the popular location point calculation process is illustrated. The subroutine is executed by the popular location (spot) point calculation unit 33 of the map information server 3.

In Figure 6, the popularity point calculation unit 33 determines whether the reduction scale S of the ultimate map sent to the user terminal device 1 is greater than a predetermined scale Sth (Step S51). In other words, Step S51 determines whether the map currently displayed in the map section E1, as shown in Figure 5A, is a relatively wide area map or a relatively small area map. When it is determined at Step S51 that the reduction scale S is not greater than the predetermined value Sth, the popularity point calculation unit 33 calculates a coordinate (latitude and longitude) CM of the center of the displayed map (Step S52). Then, the popularity point calculation unit 33 stores "1" in a register (not shown) as an initial value of the location number i. The popularity point calculation unit 33 reads the coordinate (latitude and longitude) of a location that has the location number i, from a plurality of locations stored in the database 32 (Figure 2) (Step S54). Using the coordinate of the location, the popularity point calculation unit 33 determines whether the location having the location number i exists in the map displayed in the map section E1 (Step S55). If the answer is yes, the popularity point calculation unit 33 calculates a distance Di between the coordinate of the location having the location number i and the map center coordinate CM (Step S56). The popularity point calculation unit 33 calculates a popularity point Pi of the location having the location number i, using the following equation (Step S57):

$$Pi = 100 / (1 + k \cdot Di)$$

where k is a proportional constant.

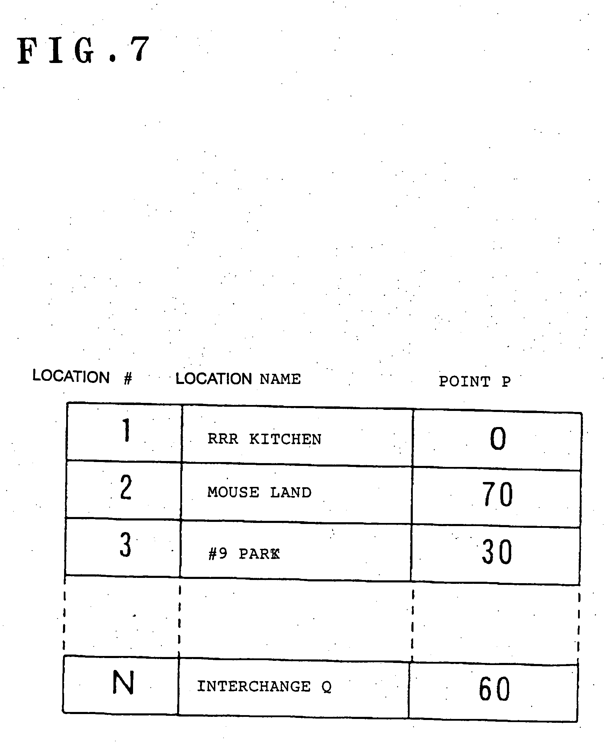

The popularity point Pi becomes higher as the location in question is located closer to the map center CM. The popularity point calculator 33 attaches the popularity point Pi to the location name and the location number, and stores them in the memory 35 as shown in Figure 7 (Step S57).

The popularity point calculator 33 determines whether the location number i is equal to a location number N of the last location stored in the popular location database 32. If it is determined that the location number i does not coincide with the last location number N, then the popularity point calculator 33 adds 1 to the location number i to update (increment) the location number i (Step S59). The new location number is overwritten and stored in the register.

If it is determined at Step S55 that the location having the location number i does not exist in the map displayed in the map section E1, the popularity point calculator 33 also executes Step S59. After Step S59, the popularity point calculator 33 returns to Step S54 to repeat the above described operations. Steps S54 to S59 are repeated until Step S58 determines that the location number i reaches the maximum value N. Therefore, the popularity point P is calculated for each of the locations having the number 1 to N, as shown in Figure 7.

When Step S58 determines that the location number i reaches the maximum value N, the popularity point calculator 33 updates the accumulated points in the database 32 (Figure 2) using the points P stored in the memory 35 (Figure 7). Specifically, the popularity point calculator 33 adds the popularity points P of Figure 7 to the accumulated points of Figure 2 for the listed locations, respectively (Step S60).

Although the popularity points P of the N locations are at the same time added to the accumulated points of the N locations in Step S60 in this embodiment, the point addition process may be executed before Step S58 so as to add the point to each location every time.

With the above described point accumulation process or total point calculation process, the popularity point of a location increases when the location appears on the displayed map upon the map searching triggered by the user via the map information server 3. The popularity point increases every time the map including the location is prepared and displayed. As described, the popularity point is weighted depending upon the existing point (coordinate) of the location, i.e., the location closer to the map center CM gains a larger point.

After the popularity point accumulation process, the user terminal device 1 sends a popular location search request to the map information server 3 if the user operates the terminal device 1 and clicks the popular location list button B5 on the screen (map image window) in Figure 5 (Step S17).

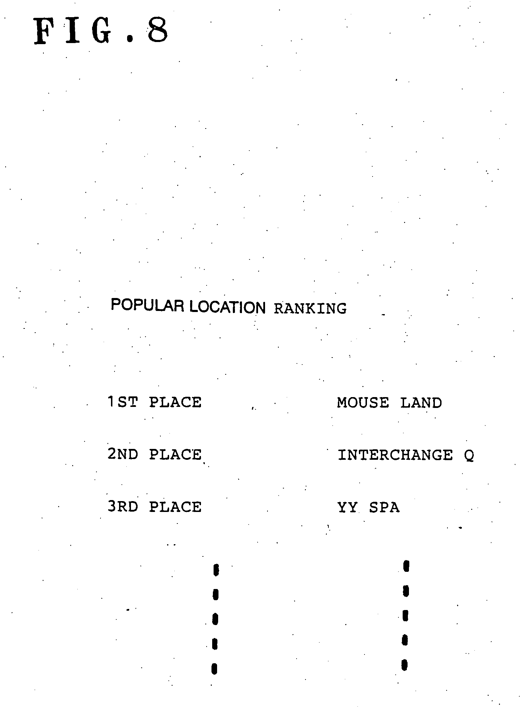

As the map information server 3 receives the popular location search request, the map information server 3 refers to the popular location database 32 of Figure 2 and prepares popular location ranking data, as shown in Figure 8, which is a list of the popular location names arranged in an order based on the total (accumulated) popularity points (Step S18). The location names are listed from the highest popularity point to the lowest popularity point in this embodiment. The map information server 3 then transmits the HTML data including the popular location ranking data to the user terminal device 1 (Step S19). Upon receiving the popular location ranking HTML data, the user terminal device 1 displays the list of the popular locations shown in Figure 8 on the display screen based on the HTML data (Step S20).

In the information providing system 5 shown in Figure 1, as described above, the map information server 3 sends to the user terminal device 1 the map data of an area specified by the user in response to an access from the user. The user terminal device 1 then displays the map image derived from the map data, on the display unit. The map information server 3 accumulatively counts how many times the location appears in the map sent from the map information server 3, every time there is an access (map request) to the map information server 3 from the user terminal device 1. The map information server 3 also performs the increment of the popularity points every time there is an access to the map information server 3 from the user terminal device 1, thereby calculating the accumulated popularity points of the locations. The map information server 3 considers that the more frequently the location appears in the displayed map, the more popular the location is. The popularity of the location is calculated based on how many times the location appears in the displayed map and how close to the map center the location is. The map information server 3 shows the user the popular location ranking (list) when there is a request from the user for such list.

By watching the popular location ranking, the user can make up his/her mind easily when the user has to decide a place to go.

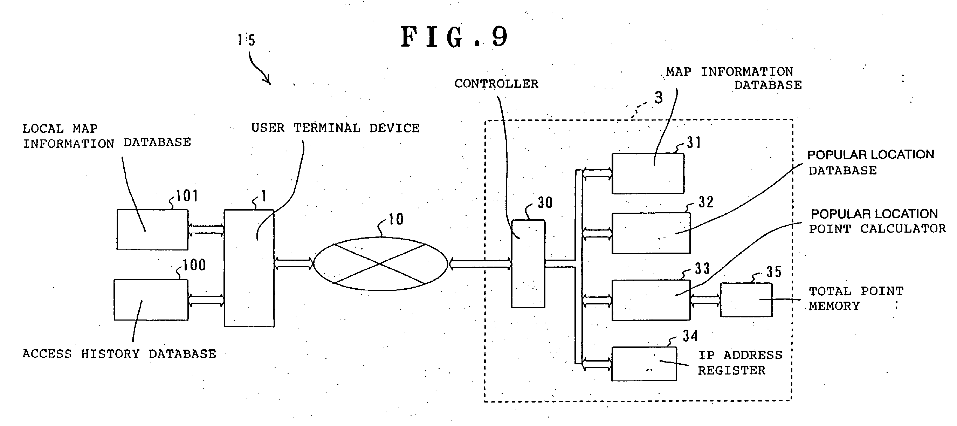

In the above described embodiment, the map information server 3 transmits the map (or map data) upon a request from the user terminal device 1, and the user terminal device 1 displays the map. It should be noted, however, that the user terminal device 1 may store the map (or map data) in its own memory or may receive the map from a database other than the map information server 3. The present invention is applicable to an information providing system having such terminal device 1. This modification (second embodiment) will be described with reference to Figures 9 to 11 as well as Figures 2, 4, 5, 5A and 6 to 8. Similar reference numerals are used to designate similar elements in the first embodiment (Figures 1 to 8) and the second embodiment (Figures 9 to 11 and other drawings).

Referring to Figure 9, the information providing system 15 of the second embodiment includes an access history database 100 and a local map information database 101, both associated to the user terminal device 1. Fundamentally, other elements in the information providing system 15 are similar to the elements in the information providing system 5 of the first embodiment (Figure 1). It should be noted that map display software is installed in the user terminal device 1 such that the user terminal device 1 can display the map as shown in Figures 5 and 5A.

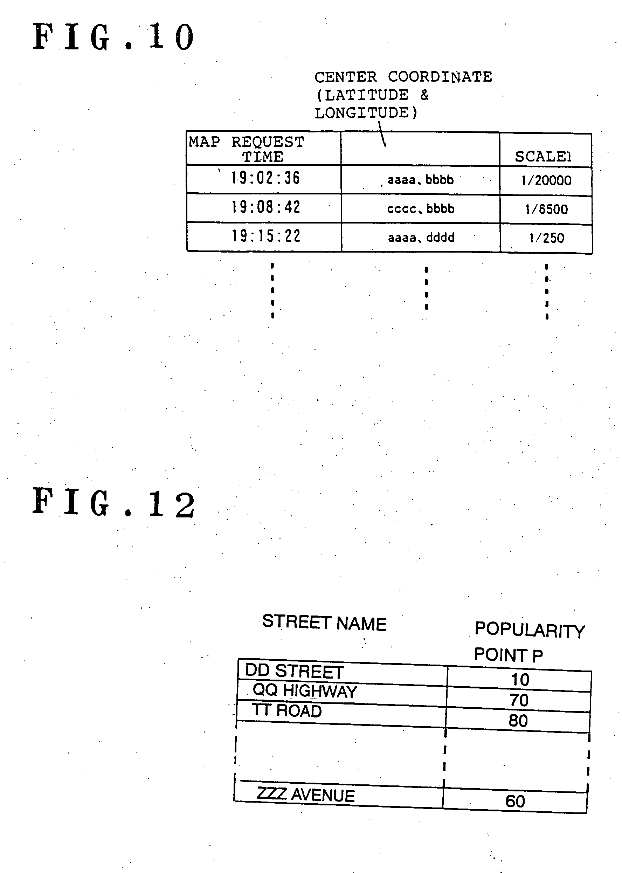

When the user operates the terminal device 1 to display the map, to shift the map and/or to change the reduction scale of the map, the terminal device 1 stores the time of the user operation, the center coordinate (latitude and longitude) of the displayed map and the reduction scale of the displayed map in the access history database 100 in the table format as shown in Figure 10. The local map information database 101 stores map data (road map) including information about one or more locations such as restaurants, shops, hotels, amusement parks, public facilities, communication facilities, parks, and sightseeing spots. The maps are stored at specified reduction scales in the local map information database 101. The map data stored in the database 101 is the map data downloaded from the map information server 3. In response to a request from the user which specifies one or more particular areas, the map information server 3 supplies the map data of those areas to the local map information database 101.

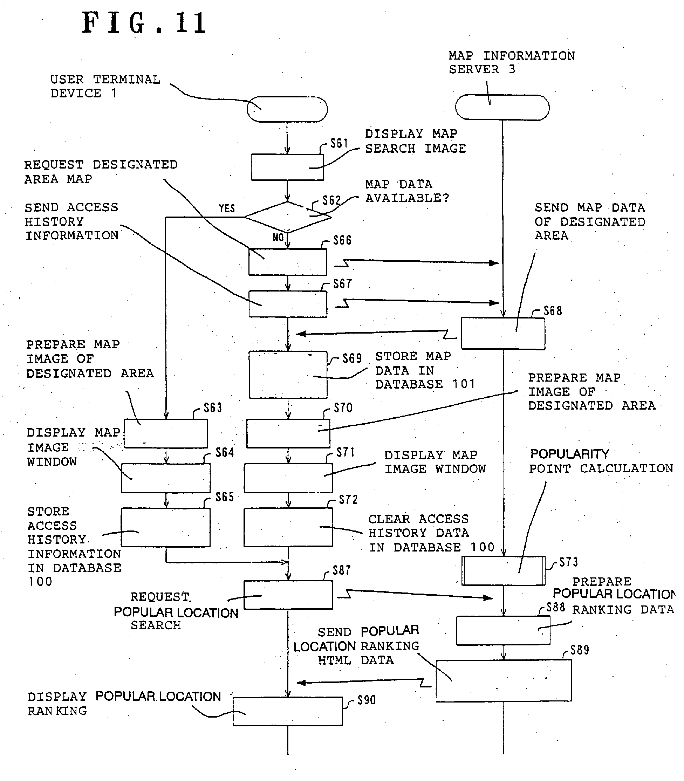

Referring to Figure 11, communication procedures between the user terminal device 1 and the map information server 3 in the information providing system 15 are illustrated.

First, the user operates the terminal device 1 to activate the map display software. The terminal device 1 then displays the map searching image, as shown in Figure 4, on the display unit (not shown) (Step S61). The user operates the terminal device 1 to enter a name of a desired area in the area designation section B1 of the map searching image. The user then clicks the search start button B2. After that, the terminal device 1 determines whether the map data of the area specified by the area designation section B1 exists in the local map information database 101 (Step S62). If the map data of the desired area is available in the database 101, the terminal device 1 retrieves the map data from the database 101 and prepares a map image from the map data (Step S63). The terminal device 1 displays a map image window on the display unit, as shown in Figure 5, which includes the map image in the map section E1 (Step S64). The terminal device 1 collects the information of the current time, the center coordinate (latitude and longitude) of the map displayed in the map section E1, and the reduction scale of the map, and stores the information (referred to as "access history information") in the access history database 100 as shown in Figure 10.

If Step S62 determines that the map data of the area designated by the area designation section B1 is not included in the local map information database 101, the user terminal device 1 sends a map request to the map information server 3 to obtain the map of the designated area (Step S66). In addition, the user terminal device 1 transmits the access history information to the map information server 3 from the access history database 100 (Step S67). The map information server 3 reads map data of the area specified by the map request, from the map information database 31, and supplies the map data to the user terminal device 1 (Step S68). Upon receiving the map data, the user terminal device 1 registers the map data in the local map information database 101 (Step S69), and prepares a map image from the map data (Step S70). The user terminal device 1 then displays the map image window on the display, as shown in Figure 5, which includes the map image indicated in the map section E1 (Step S71). After that, the user terminal device 1 clears (erases) all the information in the access history database 100 (Step S72).

Subsequent to Step S68, the map information server 3 uses the access history information, which is provided from the user terminal device 1, to perform the popularity point calculation process as shown in Figure 6 (Step S73). The reduction scale of Figure 10 is utilized as the reduction scale S at Step S51 in Figure 6, and the center coordinate of Figure 10 is utilized as the center coordinate CM at Step S52 in Figure 6.

After Step S73, the terminal device 1 sends a popular location search request to the map information server 3 as the user clicks the popular location list button B5 in the map image window (Figure 5) (Step S87). Upon receiving the popular location search request, the map information server 3 refers to the popular location database 32 (Figures 2 and 7) and prepares popular location ranking data that lists the popular location names based on the accumulated popularity points (Step S88). The location names are listed, for example, from the most popular one to the least (from the highest popularity point to the lowest). The map information server 3 supplies HTML data, which includes the popular location ranking data, to the user terminal device 1 (Step S89). The user terminal device 1 receives the popular location ranking HTML data, and displays the popular location ranking list on the display screen, as shown in Figure 8, based on the popular location ranking HTML data (Step S90).

As described above, the user terminal device 1 has some map data stored beforehand in the associated database 101, and the access history information is stored in the other database 100 as shown in Figure 10. If a desired map is not available in the local map information database 101, the user terminal device sends a map request to the map information server 3, together with the access history information. By using the access history information, the map information server 3 calculates the accumulated popularity points of the respective locations, and prepares the popular location ranking list. The map information server 3 then feeds the ranking list to the user terminal device 1. The popularity point of the location is incremented by a predetermined amount (e.g., one) every time that location appears in the map displayed in the map section E1 on the display unit. In this case, the total (accumulated) popularity point indicates how many times that location has appeared in the displayed map. Of course, an additional point may be given to the location if the location is close to the map center.

In the above described embodiments, the popularity point increases only when there is a map request to the map information server 3 from the user. It should be noted, however, that the popularity point may also increase upon any kind of access, other than the map request, from the user. If the location is a department store, for example, the popularity point may increase when the user requests directions to the department store, floor-by-floor information, event start time, and sales information.

In the above described embodiments, the popularity point is weighted (modified or given an additional point) depending upon the distance from the location to the map center. It should be noted, however, that the popularity point may not be weighted based on the distance from the location to the map center, i.e., the same point is given to the location, regardless of the distance to the map center.

Although the popularity points are calculated for the location names in the illustrated embodiments, it is also possible to calculate popularity points for the streets. As shown in Figure 2, the street names are appended to the location names in the popular location database 32. When the map of the RRR Kitchen is requested, for example, a certain point P may be given to the DD street. In such case, the chart shown in Figure 7 would be modified to a chart shown in Figure 12. The street names are arranged from the highest point to the lowest point in the list, and the popular street ranking list is sent to the user terminal device 1.

Similarly (alternatively), popularity point may be counted for the area names. As shown in Figure 2, the area names are appended to the location names in the popular location database 32. When the map of the RRR Kitchen is requested, for example, a certain point P may be given to "Shibuya." The area names are arranged from the highest point to the lowest point in the list, and the popular area ranking list is sent to the user terminal device 1.

The location categories are also appended to the street names and the area names in the popular location database 32. By statistically analyzing the points P in the popular street list (or popular area list) in terms of the location categories, it is possible to know the user's purpose of using the street (or the area).

It should be noted that any suitable network or device, other than the Internet 10, may connect the user terminal device 1 to the map information server 3. For instance, a cell phone network or a wireless LAN (local area network) may establish communication between the user terminal device 1 and the map information server 3 instead of the Internet 10.

It should be also appreciated that the user terminal device 1 may be a car navigation apparatus.

**Claims**

1. An information providing apparatus for providing a terminal device with map data via a network, comprising:

   a first memory for storing coordinate information of a plurality of locations;
   a second memory for storing popularity points of the plurality of locations;
   a map transmitter for transmitting map data of an area, designated by the terminal device, to the terminal device via the network;
   a detector for detecting a location in the designated area based on the coordinate information stored in the first memory; and
   a point calculator for incrementing the popularity point of the detected location stored in the second memory upon detection of the location.

2. The information providing apparatus according to claim 1 further comprising:

   a ranking data generator for preparing popular location ranking data indicating location names arranged in an order based on the popularity points stored in the second memory; and
   a ranking data transmitter for transmitting the popular location ranking data to the terminal device via the network.

3. The information providing apparatus according to claim 1, wherein an increment of the popularity point of the detected location varies with a distance from a center of the designated area to the detected location.

4. The information providing apparatus according to claim 1, wherein the terminal device is a car navigation device.

5. The information providing apparatus according to claim 1, wherein the network is one of the Internet, a wireless local area network and a cellular telephone network.

6. The information providing apparatus according to claim 1, wherein the second memory stores the popularity points in connection with street names, and the information providing apparatus further comprises:

   a ranking data generator for preparing popular street ranking data that indicates the street names arranged in an order based on the popularity points stored in the second memory; and
   a ranking data transmitter for transmitting the popular street ranking data to the terminal device via the network.

7. A method of providing a terminal device with map data via a network, comprising:

   transmitting map data of an area, designated by the terminal device, to the terminal device via the network;
   detecting a location in the designated area; and
   incrementing a popularity point of the detected location upon detection of the location.

8. The method according to claim 7 further comprising:

   preparing popular location ranking data that indicates location names arranged in an order based on the popularity points; and
   transmitting the popular location ranking data to the terminal device via the network.

9. The method according to claim 7, wherein an increment of the popularity point varies with a distance from a center of the designated area to the location.

10. The method according to claim 7, wherein the terminal device is a car navigation device.

11. The method according to claim 7, wherein the network is one of the Internet, a wireless local area network and a cellular telephone network.

12. The method according to claim 7 further comprising:

   preparing popular street ranking data indicating street names arranged in an order based on the popularity points; and
   transmitting the popular street ranking data to the terminal device via the network.

# FIG.1

MAP INFORMATION DATABASE

POPULAR LOCATION
DATABASE

POPULARITY
POINT ACCUMULATOR

TOTAL POINT MEMORY

IP  ADDRESS
REGISTER

CONTROLLER

USER TERMINAL DEVICE

EP 1 359 519 A2

# FIG.2

LOCATION #

CATEGORY

COORDINATE (LATITUDE & LONGITUDE)

ACCUMULTED POPULARITY POINT P

| | LOCATION NAME | | AREA | STREET | | |
|---|---|---|---|---|---|---|
| 1 | RRR KITCHEN | | SHIBUYA | | aaaa, bbbb | 0 |
| 2 | MOUSE LAND | | MAIHAMA | | cccc, bbbb | 1025 |
| 3 | NO.9 PARK | PARK | SHINJUKU | | aaaa, dddd | 253 |
| ⋮ | | | | | | |
| N | INTERCHANGE Q | | YOKOHAMA | | ssss, rrrr | 400 |

RESTAURANT

AMUSEMENT PLACE

CLOTHING SHOP

DD STREET

QQ HIGHWAY

TT ROAD

ZZZ AVENUE

EP 1 359 519 A2

# FIG.3

USER TERMINAL
DEVICE 1

MAP INFORMATION
SERVER 3

MAP SEARCH
REQUEST — S1

S2 — SEND MAP
SEARCH HTML DATA

DISPLAY MAP
SEARCH IMAGE — S3

SEND MAP
REQUEST — S4

S5 — STORE IP
ADDRESS

S6 — PREPARE MAP
IMAGE OF
DESIGNATED AREA

S7

SEND MAP
IMAGE HTML
DATA

DISPLAY MAP
IMAGE WINDOW — S8

SEND ANOTHER
MAP REQUEST
BASED ON
USER OPERATION — S9

STORE IP
ADDRESS

YES

S10 — MAP REQUEST
RECEIVED?

S11

NO

S15

NO

PREDETERMINE
TIME ELAPSED

PREPARE NEW
MAP IMAGE — S12

YES

SEND NEW MAP
IMAGE HTML
DATA

S13

DISPLAY NEW
MAP IMAGE
WINDOW — S14

S16 — POPULARITY
POINT
CALCULATION

REQUEST FOR
POPULAR LOCATION
SEARCHING — S17

S18

PREPARE POPULAR
LOCATION RANKING
DATA

S19 SEND POPULAR
LOCATION RANKING
HTML DATA

DISPLAY POPULAR
LOCATION RANKING — S20

# FIG.4

AREA
DESIGNATION     B1

▽

SEARCH     B2

# FIG.5

E1

B3

B5

SCALE   | 1/250 | 1/6500 | 1/20000 | 1/70000 | 1/200000 |

B4

POPULAR
LOCATION LIST

# FIG.5A

E1

B3

SCALE | 1/250 | 1/6500 | 1/20000 | 1/70000 | 1/200000

B4

B5

POPULAR LOCATION LIST

EP 1 359 519 A2

# FIG.6

POPULARITY POINT
ACCUMULATION ROUTINE

S51

S > Sth — YES

NO

OBTAIN MAP CENTER
COORDINATE CM — S52

$1 \rightarrow i$ — S53

READ LOCATION #i
COORDINATE FROM
DATABASE 32 — S54

S55

LOCATION #i
WITHIN
DISPLAYED
MAP?

NO

YES

CALCULATE LINEAR
DISTANCE Di
BETWEEN LOCATION #i
COORDINATE &
MAP CENTER
COORDINATE CM — S56

$P_i = \dfrac{100}{1 + k \cdot D_i}$ — S57

S58

$i = N$

NO

YES

$i + 1 \rightarrow i$ — S59

ADD POINT P TO
ACCUMULATED POINT IN
DATABASE 32 — S60

RETURN

13

# FIG.7

| LOCATION # | LOCATION NAME | POINT P |
|:---:|:---|:---:|
| 1 | RRR KITCHEN | 0 |
| 2 | MOUSE LAND | 70 |
| 3 | #9 PARK | 30 |
| N | INTERCHANGE Q | 60 |

# FIG.8

POPULAR LOCATION RANKING

1ST PLACE               MOUSE LAND

2ND PLACE             INTERCHANGE Q

3RD PLACE             YY SPA

# FIG.9

LOCAL MAP
INFORMATION DATABASE

USER TERMINAL DEVICE

CONTROLLER

MAP INFORMATION
DATABASE

101

1

30

3

31

POPULAR LOCATION
DATABASE

100

10

32

POPULAR LOCATION
POINT CALCULATOR

ACCESS HISTORY DATABASE

33

35

TOTAL POINT
MEMORY  :

34

IP ADDRESS
REGISTER

EP 1 359 519 A2

# FIG.10

|  | CENTER COORDINATE (LATITUDE & LONGITUDE) |  |
|---|---|---|
| MAP REQUEST TIME |  | SCALE↑ |
| 19:02:36 | aaaa, bbbb | 1/20000 |
| 19:08:42 | cccc, bbbb | 1/6500 |
| 19:15:22 | aaaa, dddd | 1/250 |

# FIG.12

| STREET NAME | POPULARITY POINT P |
|---|---|
| DD STREET | 10 |
| QQ HIGHWAY | 70 |
| TT ROAD | 80 |
|  |  |
| ZZZ AVENUE | 60 |

EP 1 359 519 A2

# F I G . 11

USER TERMINAL DEVICE 1

MAP INFORMATION SERVER 3

S61 — DISPLAY MAP SEARCH IMAGE

REQUEST DESIGNATED AREA MAP

SEND ACCESS HISTORY INFORMATION

YES — S62 — MAP DATA AVAILABLE?

NO — S66

SEND MAP DATA OF DESIGNATED AREA

S67

S68

PREPARE MAP IMAGE OF DESIGNATED AREA

S69 — STORE MAP DATA IN DATABASE 101

PREPARE MAP IMAGE OF DESIGNATED AREA

S63 — DISPLAY MAP IMAGE WINDOW

S70

S64

S71 — DISPLAY MAP IMAGE WINDOW

POPULARITY POINT CALCULATION

STORE ACCESS HISTORY INFORMATION IN DATABASE 100

S65

S72 — CLEAR ACCESS HISTORY DATA IN DATABASE 100

S73 — PREPARE POPULAR LOCATION RANKING DATA

REQUEST POPULAR LOCATION SEARCH

S87

S88

SEND POPULAR LOCATION RANKING HTML DATA

S89

DISPLAY POPULAR LOCATION RANKING

S90